# EUROPEAN PATENT APPLICATION

(11) **EP 4 361 208 A1**
(43) Date of publication of application: **01.05.2024**
(21) Application number: 22828086.3
(22) Date of filing: 10.05.2022
(51) Int. Cl.: C08K 5/1535, C08K 7/00, C08K 7/02, C08L 23/00, C08L 101/00

(54) **ANTIBACTERIAL AND ANTIVIRAL COMPOSITE RESIN MOLDED BODY**

(30) Priority: 25.06.2021 JP 2021105875
(71) Applicant: Panasonic Intellectual Property Management Co., Ltd., Kadoma-shi, Osaka 571-0057 (JP)
(72) Inventor: HAMABE, Masashi, Kadoma-shi, Osaka 571-0057 (JP); IMANISHI, Masayoshi, Kadoma-shi, Osaka 571-0057 (JP); NAGINO, Toshifumi, Kadoma-shi, Osaka 571-0057 (JP); NISHINO, Shouma, Kadoma-shi, Osaka 571-0057 (JP)
(74) Representative: Novagraaf International SA
(86) International application number: PCT/JP2022/019797
(87) International publication number: WO 2022/270167

(57) **Abstract**

A composite resin molded body includes a base resin, fillers dispersed in the base resin, and a furan ring compound, wherein the fillers include a fibrous filler and a particulate filler having an aspect ratio smaller than an aspect ratio of the fibrous filler, the fibrous filler has an aspect ratio of more than or equal to 10, and the particulate filler has an aspect ratio of less than or equal to 2.

## Description

### TECHNICAL FIELD

The present disclosure relates to an antibacterial and antiviral composite resin molded body capable of realizing a molded body having excellent mechanical properties and design properties and having antibacterial properties.

### BACKGROUND ART

So-called "general-purpose plastics" such as polyethylene (PE), polypropylene (PP), polystyrene (PS), and polyvinyl chloride (PVC) are not only very inexpensive but also easy to mold, and have a weight as small as a fraction of the weight of metal or ceramics. Therefore, general-purpose plastics are often used as materials of various daily commodities such as bags, various packaging, various containers, and sheets, and as materials for industrial components such as automobile components and electrical components, building materials, daily necessities, and miscellaneous goods.

Resin is convenient as described above and is adopted in many places where a person touches. However, it has been pointed out that bacteria and viruses that have propagated on the surface of resin products adversely affect the human body, and it is preferable to impart antibacterial properties and antiviral properties to resin products. Examples of the method for imparting antibacterial properties include a method in which an antibacterial agent is kneaded into a thermoplastic resin or a thermosetting resin, and a method in which an antibacterial agent is applied to a surface of the thermoplastic resin or the thermosetting resin.

On the other hand, there is known a technique for improving the mechanical strength of a general-purpose plastic by dispersing natural fibers, glass fibers, carbon fibers, and the like, which are fibrous fillers, as a filler, in a resin of the general-purpose plastic. There is also known a technique for improving the mechanical strength of a general-purpose plastic by dispersing an inorganic powder such as talc or silica or a cellulose-based powder such as pulp powder, wastepaper powder, or wood chips as a particulate filler in a resin of the general-purpose plastic. Among these, organic fillers such as cellulose are particularly attracting attention as reinforcing materials because they are inexpensive and excellent in environmental properties at the time of disposal.

To improve the mechanical strength of general-purpose plastics, various companies are conducting studies, and for example, PTL 1 describes a molded body made of a resin containing cellulose fibers and calcium carbonate at 75% at a maximum, in which the cellulose fibers and calcium carbonate exhibit antibacterial properties and also increase the strength of the molded body.

### Citation List

### Patent Literature

PTL 1: Japanese Patent No. 6472604

### SUMMARY OF THE INVENTION

A composite resin molded body according to one aspect of the present disclosure includes a base resin, fillers dispersed in the base resin, and a furan ring compound, wherein the fillers include a fibrous filler and a particulate filler having an aspect ratio smaller than an aspect ratio of the fibrous filler, the fibrous filler has an aspect ratio of more than or equal to 10, and the particulate filler has an aspect ratio of less than or equal to 2.

A method for producing a composite resin molded body according to one aspect of the present disclosure includes a step of preparing a predetermined amount of a base resin and fillers including a fibrous filler and a particulate filler, and a step of melt-kneading the base resin and the fillers to obtain a composite resin molded body containing the fillers dispersed in the base resin, wherein in the step of melt-kneading the base resin and the fillers, the fillers are caused to include a fibrous filler having an aspect ratio of more than or equal to 10 and a particulate filler having an aspect ratio of less than or equal to 2, and a furan ring compound is produced.

### BRIEF DESCRIPTION OF THE DRAWINGS

Fig. 1 is a schematic sectional view of a composite resin molded body according to a first exemplary embodiment.
Fig. 2 is a schematic sectional view (enlarged view) of the composite resin molded body according to the first exemplary embodiment.
Fig. 3 includes electron microscope images of a fibrous filler in the composite resin molded body according to the first exemplary embodiment.
Fig. 4 is a schematic diagram of a production process for the composite resin molded body according to the first exemplary embodiment.
Fig. 5 is Table 1 illustrating measurement results in each of Examples 1 to 5 and each of Comparative Examples 1 to 4.

### DESCRIPTION OF EMBODIMENT

### <Background to the present disclosure>

Antibacterial agents include inorganic antibacterial agents and organic antibacterial agents. These artificial antibacterial agents may have adverse effects such as allergic reactions due to long-term contact with the human body. In particular, allergic dermatitis may be caused by contact between a product using an artificial antibacterial agent such as a pyridine-based organic antibacterial agent and the human body.

It is possible to reduce the influence on the human body by using a material derived from nature to impart antibacterial properties. It is also desired to significantly improve the material properties (mechanical strength and the like) of general-purpose plastics. The inventors of the present invention have reached the present disclosure by considering that strength improvement can be imparted by adding a material derived from nature as a filler for improving strength, and antibacterial properties can also be imparted because of the antibacterial properties of the material derived from nature, without adding an artificial antibacterial agent.

In PTL 1, cellulose fibers are used for antibacterial properties, but cellulose itself is less able to exert antibacterial properties. Thus, calcium carbonate is used in combination with cellulose and when used as a composite resin, there is a problem that the specific gravity increases.

The present disclosure has been made to solve the above-described conventional problems, and an object of the present disclosure is to provide a composite resin molded body that has antibacterial properties and antiviral properties from a material derived from nature and has high strength, and a composite resin molded body.

A composite resin molded body according to a first aspect includes a base resin, fillers dispersed in the base resin, and a furan ring compound, wherein the fillers include a fibrous filler and a particulate filler having an aspect ratio smaller than an aspect ratio of the fibrous filler, the fibrous filler has an aspect ratio of more than or equal to 10, and the particulate filler has an aspect ratio of less than or equal to 2.

In a composite resin molded body according to a second aspect, in the first aspect, the furan ring compound contained in the composite resin molded body may have a concentration of from 4 ppb to 1000 ppb inclusive.

In a composite resin molded body according to a third aspect, in the first or second aspect, the composite resin molded body may have an L* value according to an L*a*b* color system of more than or equal to 80.

In a composite resin molded body according to a fourth aspect, in any one of the first to third aspects, the fibrous filler may account for from 1% to 10% inclusive of the fillers, and the particulate filler may account for from 50% to 70% inclusive of the filler.

In a composite resin molded body according to a fifth aspect, in any one of the first to fourth aspects, the fibrous filler may include a central portion and an end portion, the fibrous filler may be fibrillated only at the end portion, the base resin may include a first portion that is present around the central portion of the fibrous filler and a second portion that is present around the end portion of the fibrous filler, and the second portion may contain a larger amount of the furan ring compound than the first portion.

In a composite resin molded body according to a sixth aspect, in any one of the first to fifth aspects, in the composite resin molded body, a larger amount of the furan ring compound may be present in a vicinity of a surface of the composite resin molded body than in an interior of the composite resin molded body.

In a composite resin molded body according to a seventh aspect, in any one of the first to sixth aspects, the base resin may be an olefin resin.

A method for producing a composite resin molded body according to an eighth aspect includes a step of preparing a predetermined amount of a base resin and fillers including a fibrous filler and a particulate filler, and a step of melt-kneading the base resin and the fillers to obtain a composite resin molded body containing the fillers dispersed in the base resin, wherein in the step of melt-kneading the base resin and the fillers, the fillers are caused to include a fibrous filler having an aspect ratio of more than or equal to 10 and a particulate filler having an aspect ratio of less than or equal to 2, and a furan ring compound is produced.

In a composite resin molded body according to a ninth aspect, in the eighth aspect, the furan ring compound may be generated by decomposition of the fillers.

In a method for producing a composite resin molded body according a tenth aspect, in the ninth aspect, in the step of melt-kneading the base resin and the fillers, the fillers may decomposed by heat in melt-kneading and heat in molding to produce a thermal decomposition product, a degree of decomposition of the particulate filler may be larger than a degree of decomposition of the fibrous filler, the base resin may include a third portion that is present around the fibrous filler and a fourth portion that is present around the particulate filler, and the fourth portion may contain a larger amount of the thermal decomposition product than the third portion.

The composite resin molded body according to one aspect of the present disclosure can realize a composite resin molded body having antibacterial properties, antiviral properties, and high strength.

Hereinafter, a composite resin molded body according to an exemplary embodiment and a method for producing the composite resin molded body will be described with reference to the accompanying drawings. In the following description, the same components are denoted by the same reference marks, and the description thereof is appropriately omitted.

### (First exemplary embodiment)

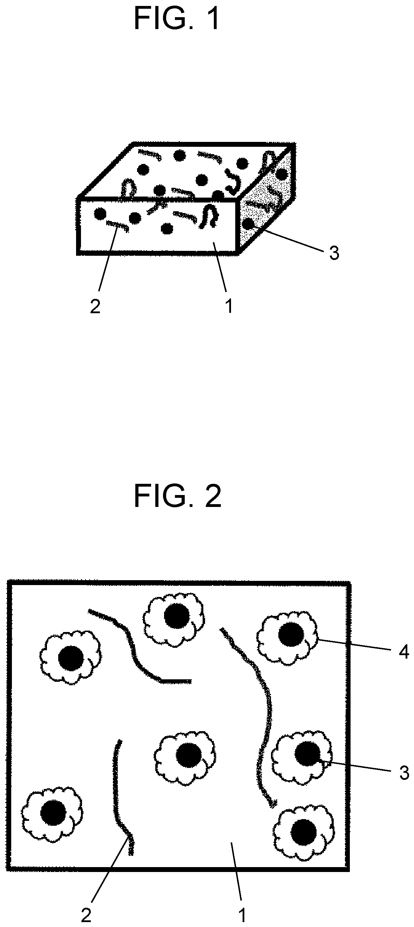

A composite resin molded body according to a first exemplary embodiment includes a base resin, a fibrous filler, a particulate filler, and a furan ring compound. The composite resin molded body may contain a dispersant. In this composite resin molded body, as illustrated in the schematic sectional views of Figs. 1 and 2, fibrous filler 2 having a large aspect ratio and particulate filler 3 having a small aspect ratio are dispersed in base resin 1.

The composite resin molded body, including a furan ring compound and the fillers, has antibacterial, antiviral properties, and high strength.

Hereinafter, each member constituting the composite resin molded body will be described.

### <Base resin>

In the first exemplary embodiment, base resin 1 is preferably a thermoplastic resin in order to ensure good moldability. Examples of the thermoplastic resin include olefin-based resins (including cyclic olefin-based resins), styrene-based resins, (meth)acrylic resins, organic acid vinyl ester-based resins or derivatives thereof, vinyl ether-based resins, halogen-containing resins, polycarbonate-based resins, polyester-based resins, polyamide-based resins, thermoplastic polyurethane resins, polysulfone-based resins (such as polyethersulfone and polysulfone), polyphenylene ether-based resins (such as polymers of 2,6-xylenol), cellulose derivatives (such as cellulose esters, cellulose carbamates, and cellulose ethers), lignin resins, modified lignin resins, silicone resins (polydimethylsiloxane, polymethylphenylsiloxane, and the like), rubbers or elastomers (diene rubbers such as polybutadiene and polyisoprene, styrene-butadiene copolymers, acrylonitrile-butadiene copolymers, acrylic rubbers, urethane rubbers, silicone rubbers, and the like), and engineering plastics. These resins may be petroleum-derived, plant-derived, or microorganism-derived resins. These resins may be used alone or in combination of two or more thereof. These resins may also have decomposability with microorganisms, water, heat, or the like. Base resin 1 is not limited to the above materials as long as it has thermoplastic properties.

Among these thermoplastic resins, base resin 1 is preferably an olefin-based resin or a polyamide-based resin having a relatively low melting point. Examples of the olefin-based resin include a homopolymer of an olefin-based monomer, a copolymer of an olefin-based monomer, and a copolymer of an olefin-based monomer and another copolymerizable monomer. Examples of the olefin-based monomer include chain olefins (for example, a-C2-20 olefins such as ethylene, propylene, 1-butene, isobutene, 1-pentene, 4-methyl-1-pentene, and 1-octene) and cyclic olefins. These olefin-based monomers may be used alone or in combination of two or more thereof. Among the olefin-based monomers, chain olefins such as ethylene and propylene are preferable. Examples of other copolymerizable monomers include fatty acid vinyl esters such as vinyl acetate and vinyl propionate; (meth)acrylic monomers such as (meth)acrylic acid, alkyl (meth)acrylate, and glycidyl (meth)acrylate; unsaturated dicarboxylic acids such as maleic acid, fumaric acid, maleic anhydride or anhydrides thereof; vinyl esters of carboxylic acids (for example, vinyl acetate, vinyl propionate, and the like); cyclic olefins such as norbornene and cyclopentadiene; and dienes such as butadiene and isoprene. These copolymerizable monomers may be used alone or in combination of two or more thereof. Specific examples of the olefin-based resin include copolymers of chain olefins (in particular, α-C2-4 olefins) such as polyethylene (low density, medium density, high density or linear low density polyethylene, and the like), polypropylene, an ethylene-propylene copolymer, and a terpolymer such as ethylene-propylene-butene-1. Examples of the polyamide-based resin that is a polymer formed by bonding a large number of monomers through amide bonds include nylon (polyamide) 6, nylon 11, nylon 12, nylon 66, nylon 610, nylon 612, nylon 1010, nylon 1012, and nylon 6T.

### <Dispersant>

Next, the dispersant will be described. The composite resin molded body according to the first exemplary embodiment may contain a dispersant for the purpose of, for example, improving adhesion between fibrous filler 2 and particulate filler 3 and base resin 1 or the dispersibility of fibrous filler 2 and particulate filler 3 in base resin 1. Examples of the dispersant include various titanate-based coupling agents, silane coupling agents, modified polyolefins grafted with unsaturated carboxylic acids, maleic acid, maleic anhydride, or anhydrides thereof, fatty acids, fatty acid metal salts, and fatty acid esters. The silane coupling agents are preferably unsaturated hydrocarbon-based silane coupling agents or epoxy-based silane coupling agents. The surface of the dispersant may be treated and modified with a thermosetting or thermoplastic polymer component. The content of the dispersant in the composite resin molded body in the present exemplary embodiment is preferably from 0.01 mass% to 20 mass% inclusive, more preferably from 0.1 mass% to 10 mass% inclusive, and still more preferably from 0.5 mass% to 5 mass% inclusive. When the content of the dispersant is less than 0.01 mass%, a dispersion failure occurs. On the other hand, when the content of the dispersant is more than 20 mass%, the strength of the composite resin molded body decreases. The dispersant is appropriately selected depending on the combination of base resin 1, fibrous filler 2, and particulate filler 3, and the dispersant does not have to be added in the case of a combination that does not require a dispersant.

### <Furan ring compound>

The composite resin molded body contains a furan ring compound. This causes the composite resin molded body to have antibacterial properties and antiviral properties. The concentration of the furan ring compound is, for example, from 4 ppb to 1000 ppb inclusive. The composite resin molded body containing the furan ring compound in an amount of more than or equal to 4 ppb sufficiently exhibits antibacterial properties and antiviral properties. The composite resin molded body containing a furan ring compound in an amount of less than or equal to 1000 ppb is less likely to be colored into brown or the like and exhibits sufficient whiteness. The furan ring compound may be contained in at least one of the base resin, the dispersant, the fibrous filler, and the particulate filler. The furan ring compound may be added or generated by decomposition of fillers as described later.

### <Fibrous filler and particulate filler>

Next, fibrous filler 2 and particulate filler 3 will be described. Particulate filler 3 may be basically made of the same material as fibrous filler 2. In this case, the fibrous filler and the particulate filler are different only in filler length and aspect ratio. Thus, in the following description, fibrous filler 2 will be described in detail.

Fibrous filler 2 (hereinafter, it may be simply referred to as "fiber") contained in the composite resin molded body according to the first exemplary embodiment is used mainly for the purpose of improving mechanical properties and improving dimensional stability due to a decrease in linear expansion coefficient in a resin molded body molded by using the composite resin molded body. For this purpose, fibrous filler 2 preferably has a higher elastic modulus than base resin 1, and specific examples thereof include carbon fibers, carbon nanotubes, pulp, cellulose, cellulose nanofibers, lignocellulose, lignocellulose nanofibers, basic magnesium sulfate fibers (magnesium oxysulfate fibers), potassium titanate fibers, aluminum borate fibers, calcium silicate fibers, calcium carbonate fibers, silicon carbide fibers, wollastonite, xonotlite, various metal fibers, natural fibers such as cotton, silk, wool, and hemp, jute fibers, regenerated fibers such as rayon and cupro, semisynthetic fibers such as acetate and promix, synthetic fibers such as polyester, polyacrylonitrile, polyamide, aramid, and polyolefin, and modified fibers obtained by chemically modifying the surfaces and terminals thereof. The filler may have a needle-like shape instead of fibrous shape, and it may be wood flour obtained from Japanese cedar, Japanese cypress, bamboo, or the like, or powder of coffee, wheat, tea leaves, or the like. Among them, carbons and celluloses are particularly preferable from the viewpoint of availability, high elastic modulus, and environmental properties. From the viewpoint of antibacterial properties, natural fibers such as celluloses and wood flour, and natural materials are preferable.

Wood flour obtained from Japanese cedar, Japanese cypress, bamboo, or the like, and powder of coffee, wheat, tea leaves, or the like each contain a substance having antibacterial properties such as hinokitiol, caffeine, and catechin in an original component, and thus, a molded body thereof also exhibits antibacterial properties. However, cellulose itself such as pulp does not have antibacterial properties. As a result of intensive studies, the inventors of the present invention have confirmed that furan ring compounds such as furfural and furfuryl alcohol, which are decomposition products of cellulose, have antibacterial properties and antiviral properties. Other examples of main furan ring compound include 5-hydroxymethyl-2-furfural, 2,5-furandicarboxaldehyde, and 2-furaldehyde. To generate the furan ring compound, it is necessary to apply heat to the resin composition or the resin molded body containing cellulose, but when heat is applied, the cellulose is decomposed, and thus, there is a problem that the reinforcing effect as a molded body is lost and at the same time the molded body is colored. Thus, as a result of intensive studies, it was found that the concentration of the furan ring compound capable of achieving all of strength, antibacterial properties, and outer appearance as a molded body is preferably, for example, from 4 ppb to 1000 ppb inclusive. The concentration of the furan ring compound may be calculated by a gas chromatograph mass spectrometer or the like. The concentration of the furan ring compound is more preferably from 4 ppb to 100 ppb inclusive, still more preferably from 4 ppb to 50 ppb inclusive.

Shapes of fibrous filler 2 and particulate filler 3 will be described. In the case of natural fibers or natural materials, the starting materials of fibrous filler 2 and particulate filler may be the same, and in this case, the fibrous fillers are pulverized more finely to become particulate. Reference mark L represents a length of fibrous filler 2 or particulate filler 3 (hereinafter, the length may be referred to as "fiber length"), and reference mark d represents a width of fibrous filler 2 or particulate filler 3 (hereinafter, the width may be referred to as "fiber diameter"). As for fibrous filler 2 and particulate filler 3, when the number of fibers having a large aspect ratio (L/d) is large, that is, when the number of fibrous fillers 2 is large, the elastic modulus improves. The aspect ratio of fibrous filler 2 is preferably more than or equal to 10. When the number of fibers having a large aspect ratio is large, the impact resistance deteriorates, and the number of fiber aggregates increases, resulting in poor outer appearance. When the number of fibers having a small aspect ratio is large, that is, when the number of particulate fillers 3 is large, the impact resistance improves, and the number of fiber aggregates is small, resulting in good outer appearance. The aspect ratio of particulate filler 3 is preferably less than or equal to 2. However, when the number of fibers having a small aspect ratio is large, the elastic modulus decreases.

Because of the presence of fibrous filler 2 and particulate filler 3 in the composite resin molded body, the heat in kneading the resin composition and in molding the resin molded body is likely to transmit to particulate filler 3 that is more finely pulverized and damaged, and thus, a furan ring compound is likely to be generated by decomposition. On the other hand, the presence of the fibrous filler improves the strength as a molded body. The relationship between the mixing proportion of the fibers that can achieve both the antibacterial properties and the strength is calculated from experiments and simulations. For example, it is preferable that the percentage of abundance of fibers having an aspect ratio of more than or equal to 10 is from 1% to 15% inclusive, and the percentage abundance of fibers having an aspect ratio of less than or equal to 2 is from 40% to 60% inclusive. In other words, the percentage of the fibrous filler in the fillers is preferably from 1% to 15% inclusive, and the percentage of the particulate filler in the fillers is preferably from 40% to 60% inclusive. The percentage of abundance of other fibers having an aspect ratio of more than 2 and less than 10 is from 25% to 49% inclusive. The percentage of abundance is a proportion of the number of each of the fibrous fillers, the particulate fillers, and the other fillers to the total number of fillers.

As described above, by applying little heat to fibrous filler 2 not to generate a furan ring compound and applying a relatively large amount of heat to particulate filler 3 to make a large number of furan ring compounds present around particulate filler 3, a molded body capable of achieving both antibacterial properties and strength can be realized. Base resin 1 includes a portion (third portion) present around fibrous filler 2 and a portion (fourth portion) present around particulate filler 3. The fourth portion contains a larger amount of thermal decomposition product (that is, furan ring compound) than the third portion. Fig. 2 is a schematic sectional view (enlarged view) of the composite resin molded body according to the first exemplary embodiment. As illustrated in Fig. 2, high concentration site 4 (fourth portion) of the furan ring compound is present around particulate filler 3. Controlling the concentration of the furan ring compound in the molded body can also achieve good outer appearance.

As the strength of the composite resin molded body, the relationship between the aspect ratio and the elastic modulus will be described. When there is a fiber having a large aspect ratio at the time of applying stress to the composite resin molded body, the fiber having high rigidity is hardly elongated even when the resin is elongated, and thus, the composite resin is not distorted. Thus, the elastic modulus improves. In the case of a fiber having a small aspect ratio, the effect of preventing distortion with the fiber is weakened when stress is applied, the composite resin is distorted, and the elastic modulus decreases.

The relationship between the aspect ratio and the impact resistance will be described. When there is a fiber having a large aspect ratio when an impact load is applied to the composite resin molded body, the fiber cannot follow the elongation of the resin, cracks are generated between the resin and the fiber, and the crack is developed to a break as a starting point. In the case of a fiber having a small aspect ratio, since the fiber is fine, the fiber follows the elongation of the resin when an impact load is applied, and thus, cracks are less likely to occur and a break is less likely to be generated.

Next, the outer appearance will be described. When the composite resin composition is applied to a portion requiring coloring with a plurality of colors including white, such as white goods, the composite resin molded body is required to have a property to be colored. To have a property to be colored as a composite resin molded body, it is necessary to maintain the whiteness of the composite resin molded body, and it is necessary to maintain the whiteness of the fiber to be added. For example, the whiteness can be represented by an L* value (it is also referred to as brightness or L value) in the L*a*b* color system. This whiteness is inversely proportional to the amount of the furan ring compound described above, and it is preferable that the L* value obtained by measuring the color difference of the fiber is high. The L* value of the fiber that improves the degree of coloration of the composite resin molded body is experimentally calculated, and the L* value is preferably more than 80, and the L* value is more preferably more than or equal to 85.

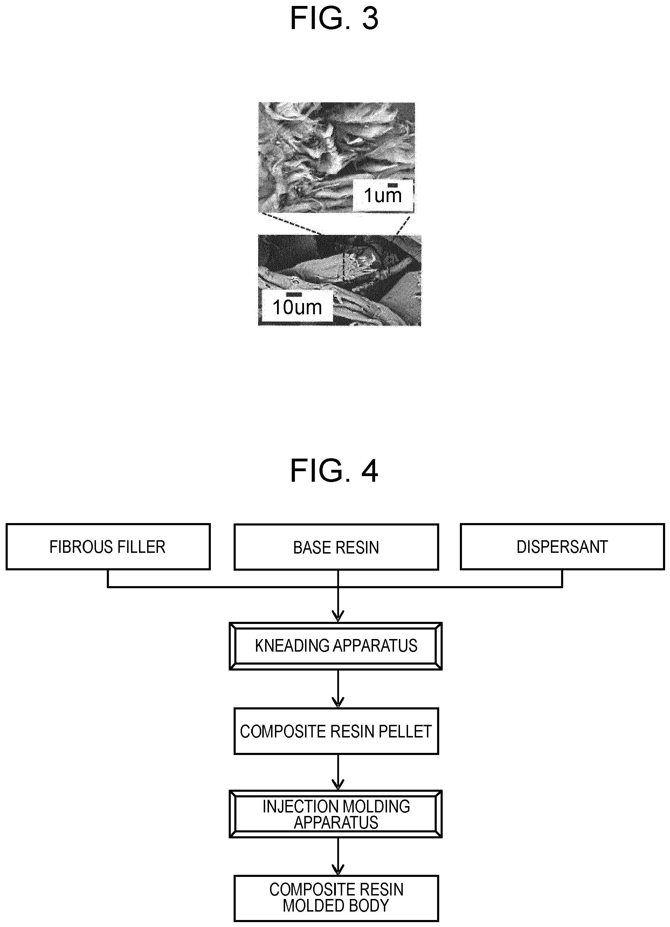

To further improve the mechanical properties, it is preferable that the specific surface area of the fiber is large because a larger number of bonding interfaces between the fiber and the base resin leads to an improvement in elastic modulus. To increase the specific surface area of the fiber, a structure in which at least one end portion A in a fiber length direction is partially fibrillated in one fiber as illustrated in Fig. 3 is most preferable.

By fibrillating only a tip of the fiber as described above, the antibacterial properties as the composite resin molded body can be further enhanced. The fibrillated portion at the tip of the fiber of the fibrous filler is relatively damaged as compared with the unfibrillated portion at the central portion, and is easily decomposed by heat. Thus, a furan ring compound is likely to be generated by heat in kneading and molding, and it is possible to further enhance the antibacterial properties while maintaining the strength of the composite resin molded body. That is, fibrous filler 2 has an unfibrillated central portion and a fibrillated end portion. Base resin 1 includes a portion (first portion) present around the central portion of fibrous filler 2 and a portion (second portion) present around the end portion of fibrous filler 2. The second portion contains a larger amount of furan ring compound than the first portion. Fig. 3 includes electron micrographs of the fibrillated portion. The optimum shape of the fiber is calculated as follows from experiments and simulation results. The fibrillated portion is preferably from 5% to 30% inclusive of entire fiber length L of fibrous filler 2. When the fibrillated portion is more than or equal to 5% of entire fiber length L, a furan ring compound is likely to be generated by heat, and the antibacterial properties can improve. When the fibrillated portion is less than or equal to 30%, decomposition of the fiber is prevented, good strength is maintained, and good outer appearance can be achieved because coloring of a molded body is reduced.

At the time of molding the resin molded body, the tip of the fiber fibrillated only at the tip can be positioned inside the molded body, and the central portion can be positioned outside the molded body through a slow cooling thermal process. As a result, a portion having a high concentration of the furan ring compound at the tip is less likely to be exposed on the surface of the molded body, and the furan ring compound is less likely to disappear due to volatilization, washing with a solvent, or the like, and the antibacterial properties and the antiviral properties can be maintained for a longer time.

Next, characteristics of fibrous filler 2 will be described. The types of base resin 1 and fibrous filler 2 are as described above. When fibrous filler 2 is too soft, that is, has a small elastic modulus with respect to base resin 1, the composite resin molded body has a small elastic modulus as a whole, resulting in a decrease in strength. When fibrous filler 2 is too hard, that is, has a large elastic modulus with respect to base resin 1, the shock wave generated at the time of impact is not propagated but absorbed at the interface between base resin 1 and fibrous filler 2. For this reason, cracking and crazing are likely to occur in the vicinity of the interface, resulting in deterioration of impact strength. Therefore, as for the relationship between the elastic modulus of base resin 1 and the elastic modulus of fibrous filler 2, the elastic modulus of fibrous filler 2 is preferably higher, and the difference is preferably as small as possible. The optimum relationship is calculated from simulation results, and the elastic modulus difference between base resin 1 and fibrous filler 2 is preferably within 20 GPa.

In addition, fibrous filler 2 may be surface-treated with various titanate-based coupling agents, silane coupling agents, modified polyolefins grafted with unsaturated carboxylic acids, maleic acid, maleic anhydride, or anhydrides thereof, fatty acids, fatty acid metal salts, fatty acid esters, or the like for the purpose of improving adhesion to base resin 1 or dispersibility in the composite resin molded body. Alternatively, fibrous filler 2 may be surface-treated with a thermosetting or thermoplastic polymer component.

### <Method for producing composite resin molded body>

Next, a method for producing a composite resin molded body will be described. Fig. 4 is a flowchart illustrating a production process for the composite resin molded body in the first exemplary embodiment.
(1) A base resin, a fibrous filler also containing a particulate filler, and a dispersant as necessary are charged into a melt-kneading apparatus, and they are melt-kneaded in the apparatus. This causes the base resin to melt and the fibrous filler and the dispersant to be dispersed in the melted base resin. At the same time, the shearing action of the apparatus promotes fibrillation of aggregates of the fibrous filler, and the fibrous filler can be finely dispersed in the base resin.

Conventionally, as the fibrous filler and the particulate filler, those obtained by fibrillating fibers in advance by a pretreatment such as wet dispersion have been used. However, when the fibrous filler is fibrillated in advance in a solvent used in wet dispersion, the fibrous filler is more likely to be fibrillated than to be fibrillated in the molten base resin, and thus, it is difficult to fibrillate only an end portion, and the entire fibrous filler is fibrillated. In addition, there is a problem that the number of processes increases and productivity deteriorates by combining the pretreatment.

On the other hand, in the production process of the composite resin molded body in the present exemplary embodiment, a melt-kneading treatment (all-dry method) is performed together with the base resin, a dispersant, and the like without performing a pretreatment by wet dispersion for the purpose of fibrillation or modification of the fibrous filler and the particulate filler. In this method, by not performing the wet dispersion treatment of the fibrous filler, the fibrous filler can be partially fibrillated only at an end portion as described above, the number of steps is small, and productivity can be improved.

To produce the fiber of the present exemplary embodiment by the all-dry method, it is preferable to apply high shear stress during kneading. Specific examples of the kneading method include a kneading method using a single-screw kneader, a twin-screw kneader, a roll kneader, a Banbury mixer, and a combination thereof. From the viewpoint of easy application of high shear and high mass productivity, a continuous twin-screw kneader and a continuous roll kneader are particularly preferable. A kneading method other than the above may be used as long as high shear stress can be applied.

(2) The composite resin molded body extruded from the melt-kneading apparatus is formed into pellets through a cutting process such as a pelletizer. As a method for pelletizing, there are an air hot cut method, an underwater hot cut method, a strand cut method, and the like as a method performed immediately after melting of the resin. Alternatively, there is also a pulverization method in which a molded body or a sheet is once molded and then pulverized and cut.

An injection-molded article as the composite resin molded body can be produced by injection-molding the pellets. Since the fibrous filler and the particulate filler in the pellets are mixed as described above, an injection-molded article excellent in antibacterial properties, strength, and outer appearance can be obtained. Hereinafter, Examples and Comparative Examples in experiments performed by the inventors will be described.

### (Example 1)

A pulp-dispersed polypropylene composite resin molded body was produced by the following production method.

A softwood pulp (product name: NBKP Celgar, manufactured by Mitsubishi Paper Mills Limited) was used as a starting material of the fibrous filler and the particulate filler. The softwood pulp was pulverized with a pulverizer to obtain a mixture of a fibrous filler and a particulate filler. The aspect ratio of each filler was adjusted through the pulverizing process. Polypropylene (product name: J108M, manufactured by Prime Polymer Co., Ltd.) as a base resin, the mixture of the fibrous filler and the particulate filler, and maleic anhydride (product name: UMEX, manufactured by Sanyo Chemical Industries, Ltd.) as a dispersant were weighed so as to have a weight ratio of 43 : 55 : 2, and they were dry-blended. Thereafter, the mixture was melt-kneaded with a twin-screw kneader (KRC kneader, manufactured by Kurimoto, Ltd.). The shearing force can be changed by changing the screw configuration of the twin-screw kneader, and in Example 1, a medium shearing type specification was used. The resin melt was hot-cut to produce pulp-dispersed polypropylene pellets.

Using the produced pulp-dispersed polypropylene pellets, a test piece of a composite resin molded body was produced by an injection molding machine (180AD manufactured by The Japan Steel Works, Ltd.). The conditions for producing the test piece were a resin temperature of 210°C, a mold temperature of 60°C, an injection speed of 60 mm/s, and a holding pressure of 80 MPa. The shape of the test piece was changed according to the evaluation items described below, and a No. 1 size dumbbell was prepared for measuring the elastic modulus. The obtained test piece of the pulp-dispersed polypropylene composite resin molded body was evaluated by the following methods.

### (Aspect ratio of fiber and fibrillation degree at end portion)

The obtained pulp-dispersed polypropylene pellets were immersed in a xylene solvent to dissolve polypropylene, and the shape of the remaining pulp fibers was observed by SEM. As a result of measuring about 50 representative fibers at five positions, the average percentage of fibers having an aspect ratio of more than or equal to 10 was 7.5%, the average percentage of fibers having an aspect ratio of less than or equal to 2 was 55%, and the remaining fibers had an aspect ratio of more than 2 and less than 10. The filler having an aspect ratio of more than or equal to 10 is referred to as a fibrous filler, and the filler having an aspect ratio of less than or equal to 2 is referred to as a particulate filler. An end portion of each fiber was in a fibrillated state, and the average value of the percentage of the fibrillated portion in the length of one fiber was 25%.

### (Concentration and position of furan ring compound)

The concentration of the furan ring compound in the composite resin molded body and the position thereof were measured by a gas chromatograph mass spectrometer (GC/MS). A portion to be measured in the composite resin molded body was taken out, freeze-pulverized, immersed in distilled chloroform, subjected to reflux extraction, and then subjected to filtration to separate chloroform soluble matter and insoluble matter. The chloroform soluble matter was evaporated and dried, then dissolved again in distilled chloroform, and subjected to GC/MS analysis. The concentration of the furan ring compound when sampled from the entire composite resin molded body was 7 ppb. When the furan ring compound concentration was measured from the resin around each of the particulate filler and the fibrous filler, the furan ring compound concentration around the particulate filler was higher.

### (Whiteness of molded body)

To measure the whiteness of the molded body, measurement was performed using a color difference meter (color difference meter CR-400 manufactured by Konica Minolta Japan Inc.). The L* value in the L*a*b* color system was used as a measure of whiteness. The L* value was 90.

### (Antibacterial property of composite resin molded body)

An antibacterial test was performed using the obtained No. 1 dumbbell-shaped test piece. The antibacterial test was performed in accordance with JIS Z 2801. Escherichia coli NBRC 3972 and Staphylococcus aureus NBRC 12732 were used as test bacteria. The initial number of bacteria was set to about 10⁴ cfu/mL, and the number of bacteria after 24 hours was measured. The number of bacteria is represented by a common logarithmic value, and in the case of a polypropylene resin alone containing no pulp, the number of bacteria after 24 hours is 5 for both E. coli and S. aureus with respect to 4 in the initial stage. The number of bacteria after 24 hours of the sample of this example was 0 for both E. coli and S. aureus.

### (Antiviral property of composite resin molded body)

An antiviral property test was performed using the obtained No. 1 dumbbell-shaped test piece. The antiviral property test was performed in accordance with JIS R 1706:2013. Bacteriophage Qβ was used as a virus species, the initial infectivity titer was set to about 10⁶ cfu/test piece, and the viral infectivity titer after 24 hours was measured. The number of viruses is represented by a common logarithmic value, and in the case of a polypropylene resin alone containing no pulp, the number of viruses after 24 hours is 5 with respect to 6 in the initial stage. The number of viruses in the sample of this example after 24 hours was 1.

### (Elastic modulus of composite resin molded body)

A bending test was performed using the obtained No. 1 dumbbell-shaped test piece. The flexural modulus was 4.3 GPa, and the reinforcing effect by the fillers was observed.

### (Outer appearance of composite resin molded body)

The composite resin molded body was evaluated for outer appearance at a visual level. When color unevenness or browning did not occur and the outer appearance was uniform, the outer appearance was regarded as OK, and when color unevenness or browning occurred, the outer appearance was regarded as NG. The outer appearance of this sample was OK.

### (Example 2)

In Example 2, the concentration of the pulp was changed to 70%, and other material conditions and process conditions were the same as those in Example 1 to prepare pulp-dispersed polypropylene pellets and a composite resin molded body. The evaluation was performed in the same manner as in Example 1.

### (Example 3)

In Example 3, the resin temperature at the time of molding was set to 240°C, and other material conditions and process conditions were the same as those in Example 1 to prepare pulp-dispersed polypropylene pellets and a composite resin molded body. The evaluation was performed in the same manner as in Example 1.

### (Example 4)

In Example 4, heat was applied during pulp pulverization so that the entire filler was damaged. Other material conditions and process conditions were the same as those in Example 1 to prepare pulp-dispersed polypropylene pellets and a composite resin molded body. The evaluation was performed in the same manner as in Example 1.

### (Example 5)

In Example 5, the number of passes through the kneader was set to seven times the usual number of passes, and fiber fibrillation was promoted. Other material conditions and process conditions were the same as those in Example 1 to prepare pulp-dispersed polypropylene pellets and a composite resin molded body. The evaluation was performed in the same manner as in Example 1.

### (Comparative Example 1)

In Comparative Example 1, the concentration of the pulp was changed to 20%, and other material conditions and process conditions were the same as those in Example 1 to prepare pulp-dispersed polypropylene pellets and a composite resin molded body. The evaluation was performed in the same manner as in Example 1.

### (Comparative Example 2)

In Comparative Example 2, the pulp was not pulverized, and other material conditions and process conditions were the same as those in Example 1 to prepare pulp-dispersed polypropylene pellets and a composite resin molded body. The evaluation was performed in the same manner as in Example 1.

### (Comparative Example 3)

In Comparative Example 3, a kneader of a low shear type was used so that the fibers were not fibrillated. Other material conditions and process conditions were the same as those in Example 1 to prepare pulp-dispersed polypropylene pellets and a composite resin molded body. The evaluation was performed in the same manner as in Example 1.

### (Comparative Example 4)

In Comparative Example 4, powdered cellulose was used as a starting material of pulp, and other material conditions and process conditions were the same as those in Example 1 to prepare pulp-dispersed polypropylene pellets and a composite resin molded body. The evaluation was performed in the same manner as in Example 1.

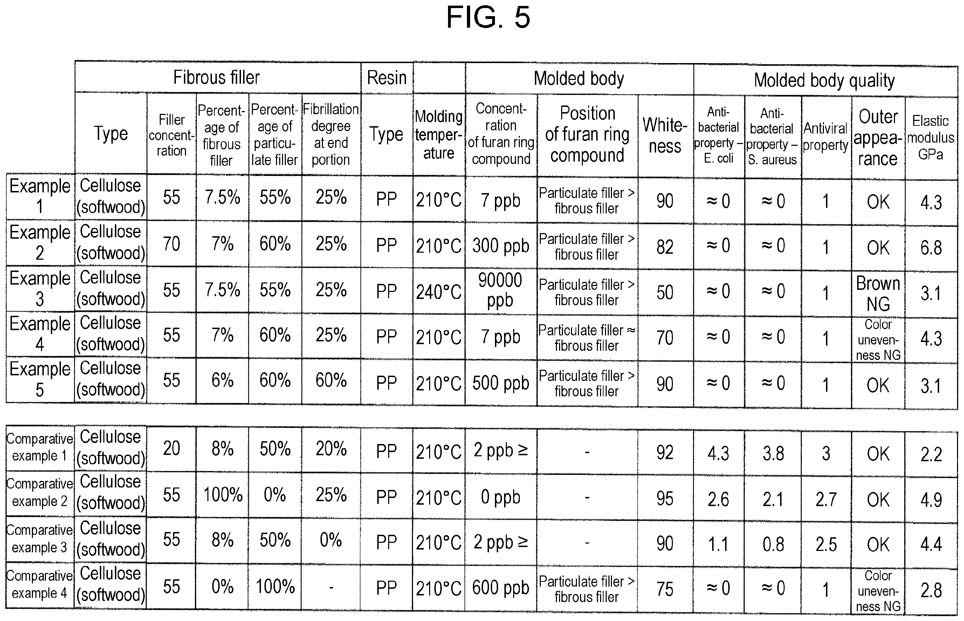

Fig. 5 is Table 1 illustrating measurement results in each of Examples 1 to 5 and each of Comparative Examples 1 to 4.

As is apparent from Table 1 in Fig. 5, in Example 2 in which the concentration of the pulp was changed to a high concentration of 70%, the furan ring compound concentration increased to 300 ppb. With the increase in the concentration, the L* value indicating whiteness slightly decreased to 82, but the elastic modulus increased. It was confirmed that there were antibacterial properties with respect to both E. coli and S. aureus and antiviral properties since the furan ring compound was contained at a predetermined concentration. In Examples 1, 2, and 5, the fibrous filler and the particulate filler having an aspect ratio smaller than that of the fibrous filler are contained, the fibrous filler has an aspect ratio of more than or equal to 10, and the particulate filler has an aspect ratio of less than or equal to 2, each molded body contains a furan ring compound having a concentration of from 4 ppb to 1000 ppb inclusive, and a larger amount of the furan ring compound is contained in the resin around the particulate filler than in the resin around the fibrous filler. It was confirmed that a molded body having antibacterial properties, antiviral properties, high elastic modulus, and good outer appearance can be obtained in such a case.

In Example 3 in which the resin temperature at the time of molding was 240°C, thermal decomposition of the pulp proceeded, and the amount of the furan ring compound considerably increased to 90,000 ppb, but the molded body turned brown, the outer appearance was NG, and the elastic modulus was slightly low.

In Example 4 in which heat was applied during pulp pulverization so that the entire filler was damaged, the percentage of abundance of the furan ring compound in the molded body became particulate filler ≈ fibrous filler. As a result, the whiteness slightly decreased, color unevenness occurred, and outer appearance became NG.

In Example 5 in which the number of passes through the kneading machine was set to seven times the usual number of passes, and the fiber fibrillation was promoted, the fibers were considerably fibrillated in the composite resin molded body, and the fibrillation degree at end portion was 60%. As a result, the concentration of the furan ring compound in the molded body became high, leading to favorable antibacterial properties and antiviral properties, but the reinforcing effect of the fiber was low, and the elastic modulus was slightly low.

In Comparative Example 1 in which the concentration of the pulp was changed to 20%, the furan ring compound concentration was less than or equal to 2 ppb, which is less than or equal to the detection limit. As a result, Comparative Example 1 had poor antibacterial properties with respect to both E. coli and S. aureus, poor antiviral properties, and low elastic modulus.

In Comparative Example 2 in which the pulp was not pulverized, the percentage of fibrous filler was 100%, and the percentage of particulate filler was 0%. As a result, Comparative Example 2 had a slightly increased elastic modulus, but had poor antibacterial properties with respect to both E. coli and S. aureus and had poor antiviral properties.

In Comparative Example 3 in which the fibers were not fibrillated by using a kneader of a low shear type, the fibers were not so fibrillated in the composite resin molded body, and there were no fibers fibrillated at an end portion. As a result, Comparative Example 3 had a decreased concentration of the furan ring compound in the molded body, poor antibacterial properties with respect to E. coli and S. aureus, and poor antiviral properties.

In Comparative Example 4 in which powdered cellulose was used as a starting material of pulp, the percentage of fibrous filler was 0%, and the percentage of particulate filler was 100%. As a result, a large amount of furan ring compound was generated, and antibacterial properties and antiviral properties were observed, but outer appearance was NG with color unevenness in the molded body, and the elastic modulus was also low.

From the above evaluation, it has been found that all of antibacterial properties, antiviral properties, mechanical strength, and good outer appearance can be achieved by including a fibrous filler and a particulate filler having an aspect ratio smaller than that of the fibrous filler in a composite resin molded body, wherein the fibrous filler has an aspect ratio of more than or equal to 10, the particulate filler has an aspect ratio of less than or equal to 2, the molded body contains a furan ring compound, a concentration of the furan ring compound is from 4 ppb to 1000 ppb inclusive, the composite resin molded body has a whiteness of more than or equal to 80, a percentage of the fibrous filler in the fillers is from 1% to 10% inclusive, a percentage of the particulate filler in the fillers is from 50% to 70% inclusive, a degree of decomposition of the particulate filler is larger than that of the fibrous filler, a thermal decomposition product of the fillers is contained in a larger amount in a resin around the particulate filler than in a resin around the fibrous filler, the fibrous filler is fibrillated only at an end portion of the fiber, and the thermal decomposition product of the fillers is contained in a larger amount in a resin around the end portion of the fibrous filler than in a resin around a central portion of the fibrous filler.

The present disclosure includes an appropriate combination of any exemplary embodiment and/or Example among the various above-described exemplary embodiments and/or Examples, and effects of each of the exemplary embodiments and/or Examples can be achieved.

### INDUSTRIAL APPLICABILITY

The composite resin molded body according to the present disclosure can provide a composite resin molded body that can impart antibacterial properties and antiviral properties and is superior in mechanical strength to conventional general-purpose resins. Since the composite resin molded body according to the present disclosure can improve the characteristics of the base resin, the composite resin molded body can be used as an alternative to engineering plastics or an alternative to metal materials. Therefore, the production cost of various industrial products or daily necessities made of engineering plastics or metals can be greatly reduced. Further, the composite resin molded body according to the present disclosure can be used for housings for home appliances, building materials, and automobile members.

### REFERENCE MARKS IN THE DRAWINGS

- 1: base resin
- 2: fibrous filler (filler)
- 3: particulate filler (filler)
- 4: furan ring compound high concentration site

## Claims

1. A composite resin molded body comprising:
a base resin;
fillers dispersed in the base resin; and
a furan ring compound,
wherein
the fillers include a fibrous filler and a particulate filler having an aspect ratio smaller than an aspect ratio of the fibrous filler, and
the fibrous filler has an aspect ratio of more than or equal to 10, and the particulate filler has an aspect ratio of less than or equal to 2.

2. The composite resin molded body according to Claim 1, wherein the furan ring compound contained in the composite resin molded body has a concentration of from 4 ppb to 1000 ppb inclusive.

3. The composite resin molded body according to Claim 1 or 2, the composite resin molded body having an L* value according to an L*a*b* color system of more than or equal to 80.

4. The composite resin molded body according to any one of Claims 1 to 3, wherein the fibrous filler accounts for from 1% to 10% inclusive of the fillers, and the particulate filler accounts for from 50% to 70% inclusive of the fillers.

5. The composite resin molded body according to any one of Claims 1 to 4, wherein
the fibrous filler includes a central portion and an end portion,
the fibrous filler is fibrillated only at the end portion,
the base resin includes a first portion that is present around the central portion of the fibrous filler and a second portion that is present around the end portion of the fibrous filler, and
the second portion contains a larger amount of the furan ring compound than the first portion.

6. The composite resin molded body according to any one of Claims 1 to 5, wherein in the composite resin molded body, a larger amount of the furan ring compound is present in a vicinity of a surface of the composite resin molded body than in an interior of the composite resin molded body.

7. The composite resin molded body according to any one of Claims 1 to 6, wherein the base resin is an olefin resin.

8. A method for producing a composite resin molded body, the method comprising:
a step of preparing a predetermined amount of a base resin and fillers including a fibrous filler and a particulate filler; and
a step of melt-kneading the base resin and the fillers to obtain a composite resin molded body containing the fillers dispersed in the base resin,
wherein in the step of melt-kneading the base resin and the fillers, the fillers are caused to include a fibrous filler having an aspect ratio of more than or equal to 10 and a particulate filler having an aspect ratio of less than or equal to 2, and a furan ring compound is produced.

9. The method according to Claim 8, wherein the furan ring compound is generated by decomposition of the fillers.

10. The method according to Claim 9, wherein in the step of melt-kneading the base resin and the fillers, the fillers are decomposed by heat in melt-kneading and heat in molding to produce a thermal decomposition product, a degree of decomposition of the particulate filler is larger than a degree of decomposition of the fibrous filler, the base resin includes a third portion that is present around the fibrous filler and a fourth portion that is present around the particulate filler, and the fourth portion contains a larger amount of the thermal decomposition product than the third portion.
